# EUROPEAN PATENT APPLICATION

(11) **EP 2 596 891 A1**
(43) Date of publication of application: **29.05.2013**
(21) Application number: 12193505.0
(22) Date of filing: 21.11.2012
(51) Int. Cl.: B23D 59/00, B23D 59/02, B23Q 11/14

(54) **Method for cooling saw blade, saw blade cooling system and saw**

(30) Priority: 23.11.2011 FI 20116168
(71) Applicant: Elematic Oy Ab, 37801 Toijala (FI)
(72) Inventor: Korkiamäki, Pekka, 37800 Toijala (FI)
(74) Representative: Kiviluoma, Markku Juhani

(57) **Abstract**

A method for cooling a saw blade (1), in which method cooling water is fed on the saw blade surface in order to decrease the temperature of the saw blade, wherein the feeding of cooling water on the saw blade (1) is adjusted on the basis of the saw blade temperature and on the basis of the formation of sludge created of sawing waste and cooling water. The invention also relates to a corresponding saw blade cooling system and to a saw provided with such a cooling system.

## Description

The invention relates to saws provided with water cooling for the saw blade. More precisely, the invention relates to a saw for sawing concrete, stone material or other corresponding material, provided with a water-cooled saw blade, to a water-cooling system for a blade and to a method for cooling a saw blade with water.

It is well known that saws used for sawing concrete are provided with a circular saw blade and water-cooling for the saw blade. Said saw blade cooling is needed during the sawing process, when the heat created in the sawing process due to friction heats the saw blade. The heating of the saw blade is extremely detrimental with concrete saws, because excessive heating of the blade results in breaking up the structural tension of the blade, which means that the saw blade easily begins to deform. This kind of deformation due to excessive heating of the saw blade, created in the middle of the sawing process, when the saw blade rotates at a high speed, partly inside the groove sawn in a concrete element, results in catastrophic consequences, to put it mildly, at least with respect to the saw blade, if not the whole sawing equipment, and is therefore an extremely undesirable phenomenon in the course of a sawing process.

In water-cooling, a rotary saw blade is cooled by water that is typically brought on the saw blade surfaces, on both sides of the saw blade, for example from the area of the center of the saw blade. In that case at least part of the water brought in the vicinity of the saw blade surface gets in contact with the saw blade, so that it is spread on the saw blade surface owing to the rotary effect of the blade, and thus lowers the blade temperature.

When sawing a concrete product, or respectively for instance stone material, sawing dust is created during the sawing that is emitted in the air and in the environment. The dust created in the sawing of concrete products, particularly when sawing the stone material contained therein, is typically quartz dust, at least partly. It is well known that quartz dust is particularly hazardous, because it is a fine-grained dust that is spread in the air and enters the respiratory system when breathing in, and it is not removed therefrom in the regular way. Therefore the formation of quartz dust that is easily spread in the air is extremely undesirable, particularly as regards occupational safety.

In part, the formation of quartz dust is reduced by the cooling water used for cooling the saw blade, part of which water enters the cutting groove along the blade, thus forming sludge together with the sawing waste, including quartz dust. However, the cooling water entering the cutting groove along with the saw blade is not sufficient for wetting the whole of the cutting groove, particularly when sawing higher-sized products, which means that quartz dust is still emitted in the air. In this connection it is also pointed out that part of the cooling water fed on the saw blade surface is sprayed, due to the centrifugal force, elsewhere than the cutting groove.

Generally the water cooling of saw blades is realized so that the feeding of water is started immediately as the rotation of the saw blade is started, which means that the blade is watered already before the sawing operation actually starts, i.e. already before the saw blade starts cutting the product to be sawn. Moreover, the quantity of cooling water fed on the saw blade is set to be constant, and said standard quantity of cooling water per time unit is naturally determined to be sufficiently large, so that the cooling effect created by the cooling water on the saw blade is adequate even with a maximum load on the blade.

Consequently, the water cooling of the saw blade continuously consumes a maximum quantity of water. Water consumption, as is well known, causes expenses, particularly the quantity of created waste water and the treatment thereof. Moreover, water supply in certain areas may be restricted.

In addition, excessive use of cooling water in the sawing process results in that the sludge created in the process is spread on a wide area of the casting bed and also of the factory floor. The drying of said sludge, and the cleaning thereof, makes the hazardous quartz dust again spread in the air.

The above described problems can be alleviated by means of the present invention. In an arrangement according to the invention, the feeding of saw blade cooling water is adjusted on the basis of the saw blade temperature and on the basis of the formation of sludge created of the sawing waste and cooling water.

Thus, the arrangement according to the invention aims at optimizing the quantity of saw blade cooling water for various different usage situations, so that remarkable savings in water consumption are achieved, in comparison with conventional solutions.

In addition, in the arrangement for adjusting the quantity of cooling water according to the invention, also a sufficient formation of sludge created of sawing waste and cooling water is taken into account, so that a sufficient watering of the cutting groove can be ensured, which in turn minimizes the spreading of hazardous quartz dust in the air.

In an arrangement according to the invention, the feeding of cooling water on the saw blade surface is advantageously started only when the saw blade starts cutting the product to be sawn. The starting moment of the cutting operation can advantageously be defined on the basis of the load on the motor rotating the saw blade.

In saws provided with a rotary saw blade, the arrangement according to the invention is advantageously realized by feeding the cooling water on the saw blade surface from both sides thereof, both through the center hole of the saw blade and from the area of the outer edges of the saw blade, to the contact area between the side surfaces of the saw blade and the surface of the product to be cut. This embodiment is particularly advantageous for ensuring a sufficient watering of the cutting groove and the cutting surface, so that the formation of quartz dust emitted in the air can be prevented or minimized.

In an arrangement according to the invention, the feeding of cooling water on the saw blade surface is advantageously started only when the saw blade starts cutting the product to be sawn. The starting moment of the cutting operation can advantageously be defined on the basis of the load on the motor rotating the saw blade.

In an embodiment according to the invention, the saw blade temperature can advantageously be defined either by a direct measurement of the saw blade temperature, or indirectly on the basis of the load on the motor rotating the saw blade.

More precisely, the method according to the invention is characterized by what is set forth in the characterizing part of claim 1; the saw blade cooling arrangement according to the invention is characterized by what is set forth in the characterizing part of claim 6; and the saw according to the invention is characterized by what is set forth in the characterizing part of claim 11.

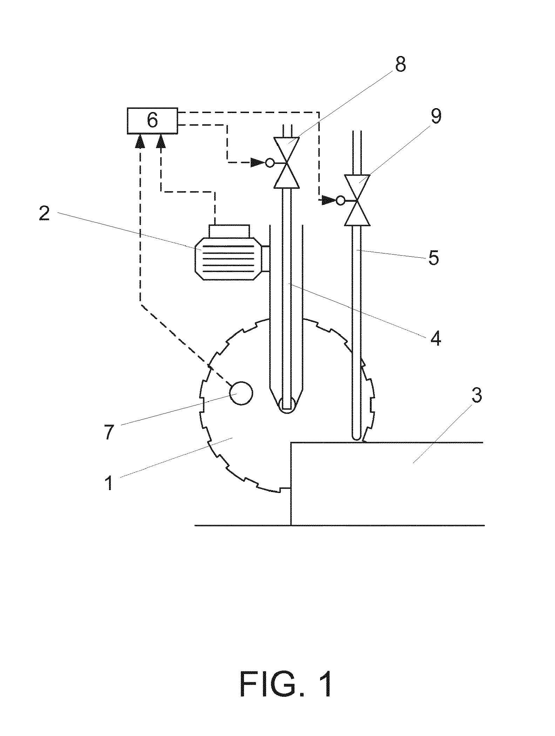

The invention is described in more detail below, by way of example, with reference to the appended drawing, where
Figure 1 is a schematical illustration of a saw blade cooling system according to the invention.

In the arrangement illustrated schematically in Figure 1, the saw blade 1 of a concrete saw is rotated by an electric motor 2 for cutting a concrete product 3.

When sawing the concrete product 3, the saw blade 1 is cooled by a cooling system according to the invention, whereby cooling water is fed on the saw blade surface by intermediation of pipes 4 and 5. Through the pipe 4, cooling water is fed in the area of the center of the saw blade, from where the cooling water is spread along the saw blade surface due to the centrifugal force when the saw blade is rotated. Through the pipe 5, cooling water is fed on the surface of the saw blade 1, to the area of the outer edge thereof, to the intersection area between the saw blade side surface and the surface of the product to be cut, or to the immediate vicinity thereof. On the other side of the saw blade 1 that is not illustrated, cooling water is fed respectively at corresponding points, so that the cooling water cools the saw blade on both sides.

In the arrangement of Figure 1, the saw blade cooling system is provided with a control device 6, which observes the temperature of the saw blade 1 by a suitable sensor 7, such as an infrared sensor, which transmits measurement data of the saw blade temperature to the control device. The control device 6 also monitors the motor load data obtained from the motor 2 rotating the saw blade 1. On the basis of the obtained data, the control device 6 adjusts the quantity of water to be sprayed on the saw blade, by adjusting the adjusting valves 8 and 9 provided in the cooling water pipes 4 and 5.

When starting the sawing operation, i.e. when the rotation of the saw blade 1 is started, the control device 6 begins to monitor the load on the motor 2 rotating the blade. As the load on the motor 2 begins to increase, or when the load is changed, the control device 6 detects that the saw blade 1 has started to cut the concrete product 3, in which case the control device 6 controls the valves 8 and 9 arranged in the cooling water pipes 4 and 5 for starting the feeding of cooling water on the saw blade surface. Respectively, the control device detects in the load data of the motor 2 a moment when the cutting activity of the saw blade 1 stops, in which case the control device stops feeding water on the saw blade surface by shutting the valves 8 and 9 of the cooling water pipes 4 and 5.

In an arrangement according to the invention, the cooling water fed in the area of the center of the saw blade 1 mainly serves as cooling water for cooling the saw blade, whereas the cooling water fed on the area of the outer edge of the saw blade, in the contact area between the side surface of the saw blade and the product to be cut, mainly performs the watering of the cutting groove created in the concrete product. Thus, the control device 6 controls the valve 8 of the cooling water pipe 4 mainly on the basis of the temperature data of the saw blade 1. The controlling action of the valve 9 of the cooling water pipe 5 is in turn based on the groove formed/forming during the sawing operation and on the size of said groove. Consequently, the controlling and adjusting of the valve 9 can be either preset according to the shape and size of the product 3 to be sawn, or the valve can be controlled for example on the basis of the obtained location data of the saw blade.

In an arrangement according to the invention, the valves 8 and 9 can be either adjusted continuously, or preset positions can be defined for them, and by changing between said positions, the quantity of cooling water fed on the saw blade can be respectively changed.

In an arrangement according to the invention, the temperature sensor 7 can, when necessary, be replaced by indirect defining of the saw blade temperature, based on the load data of the motor 2 rotating the saw blade 1.

As regards the example of Figure 1, it is also pointed out that because the position of the saw blade 1 in relation to the surface of the product to be cut is changed as the sawing proceeds, also the position of the spray nozzle of the pipe 5, feeding water to the area of the outer edge of the saw blade, in the intersection area between the side surface of the saw blade and the surface of the product to be cut, or to the immediate vicinity thereof, must be respectively adjusted. The position of the spray nozzle of the pipe 5 is always defined by the outer surface of the saw blade 1 and the surface of the product 3 to be sawn. Moreover, the position of the spray nozzle of the pipe 5 is placed at a location where the direction of rotation of the saw blade 1 is such that it brings along cooling water to the created cutting groove.

Consequently, by using an arrangement according to the invention, the quantity of cooling water used in the sawing process can be optimized, so that the drawbacks caused by excessive water consumption can be avoided.

The arrangement according to the invention is not restricted to saws used for sawing concrete products only, but it can as such be adapted to water-cooled saws for sawing other corresponding materials, such as stone material.

In regard to the embodiment illustrated in the drawing 1 and described in the specification above, it is pointed out that said embodiment only represents one example of the arrangement according to the invention, and is therefore by no means restrictive to the invention in any way. The scope of the invention is defined in the appended claims.

## Claims

1. A method for cooling a saw blade (1), in which method cooling water is fed on the saw blade surface in order to decrease the temperature of the saw blade, **characterized in that** the feeding of cooling water to the saw blade (1) is adjusted on the basis of the saw blade temperature and on the basis of the formation of sludge created of sawing waste and cooling water.

2. A method according to claim 1, **characterized in that** the feeding of cooling water is started as the saw blade (1) starts cutting.

3. A method according to claim 1 or 2, **characterized in that** the cooling water is fed on the surfaces of the saw blade (1) from the area of the center of the saw blade, as well as from the vicinity of the outer edge of the saw blade, to the intersection area of the saw blade side surfaces and the surface of the product (3) to be cut, or to the immediate vicinity thereof.

4. A method according to claim 2 or 3, **characterized in that** the moment when the saw blade (1) starts to cut is defined on the basis of the data of the load on the motor (2) rotating the saw blade.

5. A method according to any of the claims 1-4, **characterized in that** the temperature of the saw blade (1) is defined directly, by measuring the saw blade temperature, and/or indirectly, on the basis of the data of the load on the motor (2) rotating the saw blade.

6. Cooling system for a saw blade (1), said system comprising means (4, 5) for feeding cooling water on the saw blade surfaces in order to reduce the saw blade temperature, **characterized in that** the system includes means (6, 8, 9) for adjusting the feeding of cooling water on the basis of the temperature of the saw blade (1) and on the basis of the formation of sludge created of sawing waste and cooling water.

7. A system according to claim 6, **characterized in that** the system includes means (2, 6) for defining the starting moment of the cutting action of the saw blade (1), and means (6) for starting the feeding of cooling water on the basis thereof.

8. A system according to claim 6 or 7, **characterized in that** the means for feeding cooling water on the surfaces of the saw blade (1) include means (4, 5) for feeding cooling water on the saw blade surfaces from the area of the center of the saw blade and from the vicinity of the outer edge of the saw blade to the area of the intersection between the side surfaces and the surface of the product (3) to be cut.

9. A system according to claim 7 or 8, **characterized in that** the means for defining the starting moment of the cutting action of the saw blade (1) include means (6) for defining the load on the motor (2) rotating the saw blade.

10. A system according to any of the claims 6-9, **characterized in that** the system includes means (7) for measuring the temperature of the saw blade (1) and/or means (6) for defining the saw blade temperature on the basis of the data of the load on the motor rotating the saw blade.

11. A saw, particularly for cutting stone material and concrete, **characterized in that** the saw is provided with a cooling system according to any of the claims 6-10.
